# EUROPÄISCHE PATENTSCHRIFT

(11) **EP 2 829 442 B1**
(45) Veröffentlichungstag und Bekanntmachung des Hinweises auf die Patenterteilung: **06.09.2017**
(21) Anmeldenummer: 14176116.3
(22) Anmeldetag: 08.07.2014
(51) Int. Cl.: B60S 1/56, B60S 1/54, B60R 19/48, G01S 13/93

(54) **Anordnung zum Enttauen und/oder Enteisen eines Radarsensors in einem Kraftfahrzeug, Verfahren zum Betreiben einer einen Radarsensor aufweisenden Radareinrichtung und Baugruppe mit einer Anordnung**
Assembly for thawing and/or de-icing a radar sensor in a motor vehicle, method for operating a radar sensor having a radar device and assembly with an arrangement
Agencement destiné au désembuage et/ou au dégivrage d'un capteur radar dans un véhicule automobile, procédé de fonctionnement d'un dispositif de radar présentant un capteur radar et composant doté d'un agencement

(30) Priorität: 22.07.2013 DE 102013214286
(43) Veröffentlichungstag der Anmeldung: 28.01.2015
(73) Patentinhaber: ROBERT BOSCH GMBH, 70442 Stuttgart (DE)
(72) Erfinder: Miksch, Ralph, 71229 Leonberg (DE); Schneider, Marcus, 71642 Ludwigsburg (DE); Bonura, Francesco, 71229 Leonberg (DE)

(56) Entgegenhaltungen:
- DE-A1- 19 850 639
- DE-A1-102012 015 260
- US-A1- 2005 115 943
- US-A1- 2006 152 705

## Beschreibung

### Stand der Technik

Die Erfindung betrifft eine Anordnung zum Enttauen und/oder Enteisen eines Radarsensors in einem Kraftfahrzeug nach dem Oberbegriff des Anspruchs 1. Ferner betrifft die Erfindung ein Verfahren zum Betreiben einer einen Radarsensor aufweisenden Radareinrichtung und eine Baugruppe mit einer erfindungsgemäßen Anordnung.

Eine Anordnung nach dem Oberbegriff des Anspruchs 1 ist aus der DE 198 50 639 A1 bekannt. In der bekannten Schrift sind verschiedene Ausführungsformen zur Beheizung des Gehäuses eines Radarsensors aufgeführt. Bei dem in der Fig. 15 der Schrift gezeigten Ausführungsbeispiel wird über eine Luftausblasdüse, die über einen Luftauslassschlauch mit der Klimaanlage des Kraftfahrzeugs verbunden ist, der Enttauung bzw. Enteisung des Strahlungsfensters eines Radarsensors dienende (warme) Luft auf einen Randbereich des Strahlungsfenster gerichtet. Wesentlich dabei ist, dass die Anordnung des Luftauslassschlauches mit der Luftausblasdüse derart ist, dass diese unmittelbar mit geringem Abstand auf das Strahlungsfenster gerichtet ist. Dies bedingt, je nach spezifischem Einbau des Radarsensors in bzw. hinter dem Stoßfänger des Fahrzeugs eine relativ komplizierte und darüber hinaus gegenüber äußeren Störeinflüssen empfindliche Anordnung des Luftauslassschlauchs. Weiterhin ist der verwendete Luftauslassschlauch als separater Schlauch ausgebildet, so dass zusätzliche Herstell- und Montagekosten entstehen und darüber hinaus das Kraftfahrzeug entsprechend konstruktiv ausgelegt werden muss, damit der zusätzliche Luftauslassschlauch, der auch einen zusätzlichen Bauraum benötigt, untergebracht werden kann.

Aus der DE 10 2012 015 260 A1 ist es darüber hinaus bekannt, einen Radarsensor durch Luft, in Abhängigkeit von der Umgebungstemperatur, zu beheizen. Hierzu weist der Radarsensor bzw. dessen Gehäuse Wärmeleitkanäle auf, die zusätzlich auch in Strukturbauteilen des Fahrzeugs angeordnet sein können. Eine derartige Anordnung unter Verwendung von zusätzlichen Wärmeleitkanälen in dem Gehäuse des Radarsensors erhöht jedoch dessen Bauraum und ist darüber hinaus konstruktiv relativ aufwendig und teuer in der Herstellung.

### Offenbarung der Erfindung

Ausgehend von dem dargestellten Stand der Technik liegt der Erfindung die Aufgabe zugrunde, eine Anordnung zum Enttauen und/oder Enteisen eines Radarsensors in einem Kraftfahrzeug nach dem Oberbegriff des Anspruchs 1 derart weiterzubilden, dass eine effektive und relativ preiswerte Anordnung ermöglicht wird. Diese Aufgabe wird erfindungsgemäß bei einer Anordnung mit den Merkmalen des Anspruchs 1 dadurch gelöst, dass die schlauchförmige Einrichtung ein Entlüftungsschlauch ist, der den Innenraum
des Kraftfahrzeugs entlüftet. Mit anderen Worten gesagt bedeutet dies, dass kein separater, die Herstellkosten der Anordnung verteuernder sowie zusätzlicher Bauraum benötigender Schlauch verwendet wird, sondern derjenige Entlüftungsschlauch, der bei jedem Fahrzeug zur Entlüftung des Innenraums vorgesehen ist. Dadurch ist ggf. lediglich eine andere Verlegung des sowieso vorhandenen Entlüftungsschlauchs erforderlich. Wesentlich dabei ist, dass die Temperaturen im Innenraum des Kraftfahrzeugs, insbesondere wenn dieses bereits eine bestimmte Fahrstrecke zurückgelegt hat, üblicherweise weit über 0°C liegen, so dass die über den Entlüftungsschlauch aus dem Innenraum des Fahrzeugs herausgeleitete Luft eine genügend hohe Temperatur aufweist, um den Radarsensor zu enttauen bzw. zu enteisen.

Vorteilhafte Weiterbildungen der erfindungsgemäßen Anordnung sind in den Unteransprüchen aufgeführt.

Ganz besonders bevorzugt ist eine konstruktive Anordnung des Entlüftungsschlauchs, bei der der Auslassbereich des Entlüftungsschlauchs auf der dem Strahlungsfenster abgewandten Seite des Gehäuses des Radarsensors angeordnet ist. Dadurch ist innerhalb des Stoßfängers insbesondere keine aufwendige Führung des Entlüftungsschlauchs in Richtung zum Strahlungsfenster erforderlich, das auf der dem Stoßfänger zugewandten Seite des Radarsensors angeordnet ist.

Eine besonders gute Heizwirkung sowie die Möglichkeit einer gezielten Führung der Luft wird ermöglicht, wenn wenigstens ein Luftleitelement vorgesehen ist, das die aus dem Auslassbereich ausströmende Luft auf den Radarsensor und/oder den Stoßfänger leitet. Ein derartiges Luftleitelement ist, im Gegensatz zu einem entsprechend verlängert ausgebildeten bzw. gezielt geführten Entlüftungsschlauch robuster und ermöglicht insbesondere auch eine großflächigere Verteilung/Aufteilung der aus dem Entlüftungsschlauch entweichenden Luft. Insbesondere ist es dadurch beispielsweise möglich, das Strahlungsfenster, im Gegensatz zu einer punktuellen Erwärmung durch einen Entlüftungsschlauch, großflächig mit der aus dem Entlüftungsschlauch austretenden Luft in Wirkverbindung zu bringen.

Insbesondere kann es dabei vorgesehen sein, dass zwischen dem Strahlungsfenster und dem Stoßfänger ein Zwischenraum bzw. Spalt ausgebildet ist, und dass das wenigstens eine Luftleitelement zumindest einen Teil der Luft zwischen das Strahlungsfenster und den Stoßfänger leitet. Eine konstruktiv bevorzugte Ausgestaltung für das Luftleitelement sieht vor, dass das Luftleitelement das Gehäuse des Radarsensors an einer Umfangsfläche des Gehäuses zumindest im Wesentlichen vollständig, unter Ausbildung eines zumindest bereichsweise ausgebildeten Spalts zwischen der Umfangsfläche des Gehäuses und dem Luftleitelement, umgibt.

Insbesondere kann es vorgesehen sein, dass der Radarsensor in einem Eckbereich des Stoßfängers angeordnet ist. Eine derartige Anordnung ist deshalb von besonderem Vorteil, da die in dem Eckbereich angeordneten Radarsensoren insbesondere beispielsweise der Erkennung bzw. Überwachung des Totwinkels des Kraftfahrzeugs dienen und somit eine besonders hohe Sicherheitsrelevanz aufweisen.

Zuletzt ist es in einer weiteren bevorzugten Ausgestaltung einer Anordnung vorgesehen, dass beim Vorhandensein mehrerer Radarsensoren der- bzw. diejenigen der Radarsensor/-en mit dem Entlüftungsschlauch versehen ist/sind, der/die eine hohe Sicherheitsrelevanz aufweist/aufweisen oder/und aufgrund der spezifischen Anordnung gegenüber anderen Radarsensoren zur Taubildung/Vereisung neigt/neigen.

Bei einem besonders bevorzugten Verfahren zum Betreiben einer erfindungsgemäßen Anordnung ist es vorgesehen, dass die Zufuhr von temperaturabhängig erfolgt.

Zuletzt umfasst die Erfindung auch Baugruppe, insbesondere einen Stoßfänger mit einer erfindungsgemäßen Anordnung.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines Frontbereichs eines Kraftfahrzeugs mit einem in einem Eckbereich angeordneten Radarsensor,
- Fig. 2: einen Schnitt durch den Eckbereich des Kraftfahrzeugs im Bereich des Stoßfängers gemäß Fig. 1 bei einer ersten Ausführungsform einer Heizeinrichtung und
- Fig. 3: eine gegenüber Fig. 2 modifizierte Anordnung unter Verwendung eines Luftleitelements.

Gleiche Elemente bzw. Elemente mit gleicher Funktion sind in den Figuren mit den gleichen Bezugsziffern versehen.

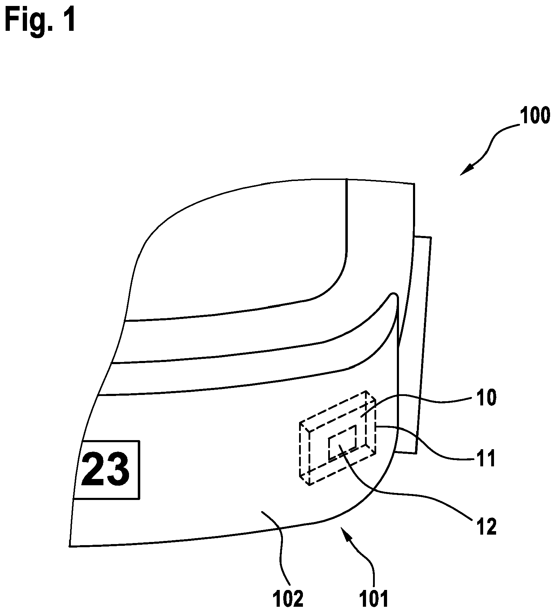

In der Fig. 1 ist ein Teilbereich der Front eines Kraftfahrzeugs 100 dargestellt, das eine aus dem Stand der Technik an sich bekannte Radareinrichtung zur Detektion von Objekten aufweist. Eine derartige Radareinrichtung weist einen, in der Praxis jedoch mehrere Radarsensoren 10 auf, wobei der in den Figuren dargestellte Radarsensor 10 in einem Eckbereich 101 des Kraftfahrzeugs 100 im Bereich dessen Stoßfängers 102 an der Innenseite des Stoßfängers 102 auf an sich bekannte, und daher nicht dargestellte Art und Weise befestigt ist. Wesentlich ist auch, dass das Material des Stoßfängers 102, zumindest im Bereich des Radarsensors 10, derart ausgebildet ist, dass der Radarsensor 100 in dem Abstrahl- und Empfangssektor 103 für Radarstrahlen durchlässig ist.

Der Radarsensor 10 weist ein in etwa quaderförmiges Gehäuse 11 auf, das auf der dem Stoßfänger 102 zugewandten Seite ein Strahlungsfenster 12 zum Aussenden bzw. Empfangen der Radarstrahlen hat. Das Gehäuse 11 ist unter Ausbildung eines Zwischenraums in Form eines Spalts 13 zur Innenseite des Stoßfängers 102 angeordnet, so dass insbesondere auch zwischen dem Strahlungsfenster 12 und dem Stoßfänger 102 der Spalt 13 ausgebildet ist.

Fluchtend zu der dem Strahlungsfenster 12 abgewandten Rückseite des Gehäuses 11 des Radarsensor 10 mündet ein Auslassbereich 14 eines Entlüftungsschlauchs 15, der mit aus dem nicht dargestellten Innenraum des Kraftfahrzeugs 100 verbunden ist. Der Entlüftungsschlauch 15 dient der Entlüftung des Innenraums des Kraftfahrzeugs 100. Insbesondere ist es vorgesehen, dass der Entlüftungsschlauch 15 unmittelbar, d.h. ohne Zwischenschaltung beispielsweise einer Heizeinrichtung o.ä. mit dem Innenraum des Kraftfahrzeugs 100 verbunden ist. Weiterhin kann es vorgesehen sein, dass die Entlüftung in Richtung zum Radarsensor 10 in Abhängigkeit der Innenraum- oder Außentemperatur gesteuert wird. Im dargestellten Ausführungsbeispiel ist der Auslassbereich 14 mit einem derartigen Querschnitt versehen, dass dieser in etwa dem Querschnitt bzw. der Fläche des Gehäuses 11 des Radarsensors 10 auf der dem Strahlungsfenster 12 abgewandten Rückseite des Gehäuses 11 entspricht. Zwischen dem Auslassbereich 14 und der Rückseite des Gehäuses 11 ist ebenfalls ein Spalt 16 ausgebildet, so dass die aus dem Auslassbereich 14 ausströmende Luft groß- bzw. vollflächig um das Gehäuse 11 und das Strahlungsfenster 12 strömen kann und dabei im Sinne einer Heizeinrichtung der Taubildung bzw. Vereisung des Radarsensors 10 entgegenwirkt.

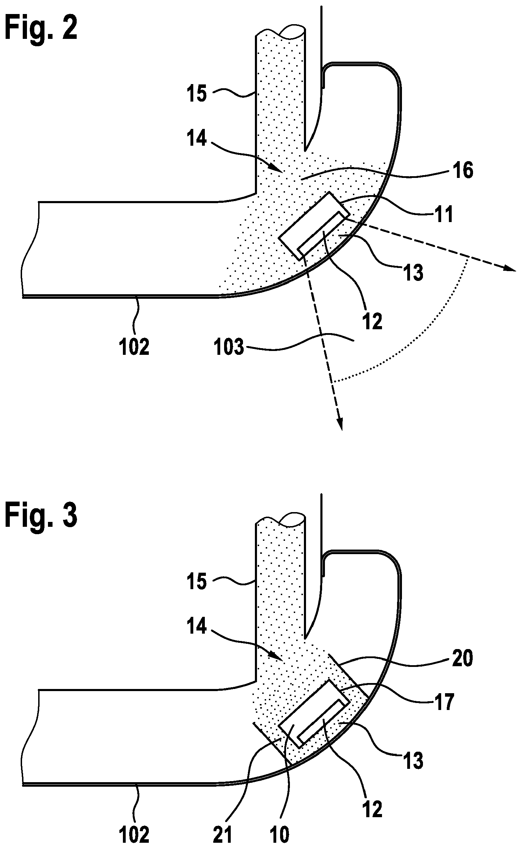

Bei dem in der Fig. 3 dargestellten Ausführungsbeispiel der Erfindung ist das Gehäuse 11 des Radarsensors 10 an einer Umfangsfläche 17 von einem Luftleitelement 20 umgeben, das an dem Stoßfänger 102 (spaltlos) befestigt ist. Das Luftleitelement 20 ist mit einem Spalt 21 zur Umfangsfläche 17 des Gehäuses 11 angeordnet und bewirkt, dass die aus dem Entlüftungsschlauch 15 ausströmende Luft durch das Luftleitelement 20 aufgefangen und gezielt in Wirkverbindung mit dem Gehäuse 11 sowie dem Strahlungsfenster 12 gelangt, so dass insbesondere die gesamte, aus dem Entlüftungsschlauch 15 ausströmende Luft der Beheizung des Radarsensors 10 zugeführt wird.

Der soweit dargestellte Radarsensor 10 bzw. die Anordnung zur Beheizung des Radarsensors 10 kann in vielfältiger Art und Weise abgewandelt bzw. modifiziert werden, ohne vom Erfindungsgedanken abzuweisen.

## Patentansprüche

1. Anordnung zum Enttauen und/oder Enteisen eines Radarsensors (10) in
einem Kraftfahrzeug (100), wobei der Radarsensor (10) ein Gehäuse (11)
mit einem Strahlungsfenster (12) zum Abstrahlen und/oder Empfangen von Radarwellen aufweist, wobei der Radarsensor (10) hinter einem Stoßfänger (102) des Kraftfahrzeugs (100) angeordnet ist, und mit einer einen Auslassbereich (14) für Luft aufweisenden, schlauchförmigen Einrichtung, wobei der Auslassbereich (14) derart angeordnet ist, dass die Luft zumindest mittelbar auf die Außenseite des Gehäuses (11) und/oder des Strahlungsfensters (12) einwirkt,
**dadurch gekennzeichnet,**
**dass** die schlauchförmige Einrichtung ein Entlüftungsschlauch (15) ist, der den Innenraum des Kraftfahrzeugs (100) entlüftet.

2. Anordnung nach Anspruch 1,
**dadurch gekennzeichnet,**
**dass** der Auslassbereich (14) des Entlüftungsschlauchs (15) auf der dem Strahlungsfenster (12) abgewandten Seite des Gehäuses (11) angeordnet ist.

3. Anordnung nach Anspruch 2,
**dadurch gekennzeichnet,**
**dass** wenigstens ein Luftleitelement (20) vorgesehen ist, das die aus dem Auslassbereich (14) ausströmende Luft auf den Radarsensor (10) und/oder den Stoßfänger (102) leitet.

4. Anordnung nach Anspruch 3,
**dadurch gekennzeichnet,**
**dass** zwischen dem Strahlungsfenster (12) und dem Stoßfänger (102) ein Zwischenraum (13) ausgebildet ist, und dass das wenigstens eine Luftleitelement (20) zumindest einen Teil der Luft
zwischen das Strahlungsfenster (12) und den Stoßfänger (102) leitet.

5. Anordnung nach Anspruch 3 oder 4,
**dadurch gekennzeichnet,**
**dass** das Luftleitelement (20) das Gehäuse (11) des Radarsensors (10) an einer Umfangsfläche (17) des Gehäuses (11) zumindest im Wesentlichen vollständig, unter Ausbildung eines zumindest bereichsweise ausgebildeten Spalts (17) zwischen der Umfangsfläche (17) des Gehäuses (11) und dem Luftleitelement (20), umgibt.

6. Anordnung nach einem der Ansprüche 2 bis 5,
**dadurch gekennzeichnet,**
**dass** das wenigstens eine Luftleitelement (20) an dem
Stoßfänger (102) befestigt wird.

7. Anordnung nach einem der Ansprüche 1 bis 6,
**dadurch gekennzeichnet,**
**dass** der Radarsensor (10) in einem Eckbereich (101) des Stoßfängers (102) angeordnet ist.

8. Anordnung nach einem der Ansprüche 1 bis 7,
**dadurch gekennzeichnet,**
**dass** beim Vorhandensein mehrerer Radarsensoren (10) der- bzw.
diejenigen der Radarsensor/-en (10) mit dem Entlüftungsschlauch (15) versehen ist/sind, der/die eine hohe Sicherheitsrelevanz aufweist/aufweisen oder/und aufgrund der spezifischen Anordnung gegenüber anderen Radarsensoren (10) zur Taubildung/Vereisung neigt/neigen.

9. Verfahren zum Betreiben einer Anordnung nach einem der Ansprüche 1 bis 8,
**dadurch gekennzeichnet,**
**dass** die Zufuhr von Luft temperaturabhängig, insbesondere außentemperaturabhängig durchgeführt wird.

10. Baugruppe, insbesondere Stoßfänger (102) mit einer Anordnung nach einem der Ansprüche 1 bis 8.

## Claims

1. Arrangement for thawing and/or deicing a radar sensor (10) in a motor vehicle (100), wherein the radar sensor (10) has a housing (11) with a radiation window (12) for emitting and/or receiving radio waves, wherein the radar sensor (10) is arranged behind a bumper (102) of the motor vehicle (100), and with a device in the form of a tube that has an outlet region (14) for air, wherein the outlet region (14) is arranged in such a way that the air acts at least indirectly on the outer side of the housing (11) and/or of the radiation window (12),
**characterized**
**in that** the device in the form of a tube is a venting tube (15), which vents the passenger compartment of the motor vehicle (100).

2. Arrangement according to Claim 1,
**characterized**
**in that** the outlet region (14) of the venting tube (15) is arranged on the side of the housing (11) that is facing away from the radiation window (12).

3. Arrangement according to Claim 2,
**characterized**
**in that** at least one directing element (20) is provided, directing the air flowing out of the outlet region (14) onto the radar sensor (10) and/or the bumper (102).

4. Arrangement according to Claim 3,
**characterized**
**in that** an intermediate space (13) is formed between the radiation window (12) and the bumper (102), and in that the at least one directing element (20) directs at least part of the air between the radiation window (12) and the bumper (102) .

5. Arrangement according to Claim 3 or 4,
**characterized**
**in that** the directing element (20) surrounds the housing (11) of the radar sensor (10) at least substantially completely at a circumferential surface (17) of the housing (11), to form a gap (17) between the circumferential surface (17) of the housing (11) and the directing element (20) that is formed at least in certain regions.

6. Arrangement according to one of Claims 2 to 5, **characterized**
**in that** the at least one air directing element (20) is fastened to the bumper (102).

7. Arrangement according to one of Claims 1 to 6, **characterized**
**in that** the radar sensor (10) is arranged in a corner region (101) of the bumper (102).

8. Arrangement according to one of Claims 1 to 7, **characterized**
**in that**, when there are a number of radar sensors (10), that radar sensor or those radar sensors (10) that has/have a great relevance to safety and/or a tendency to be affected by condensation/ice as a result of the specific arrangement in relation to other radar sensors (10) is/are provided with the venting tube (15).

9. Method for operating an arrangement according to one of Claims 1 to 8,
**characterized**
**in that** the supplying of air is carried out temperature-dependently, in particular outside-temperature-dependently.

10. Assembly, in particular bumper (102), with an arrangement according to one of Claims 1 to 8.

## Revendications

1. Arrangement de dégel et/ou de dégivrage d'un capteur radar (10) dans un véhicule automobile (100), le capteur radar (10) possédant un boîtier (11) pourvu d'une fenêtre de rayonnement (12) destinée à l'émission et/ou à la réception d'ondes radar, le capteur radar (10) étant disposé derrière un pare-chocs (102) du véhicule automobile (100), et comprenant un dispositif en forme de boudin qui possède une zone de sortie (14) pour l'air, la zone de sortie (14) étant disposée de telle sorte que l'air agit au moins indirectement sur le côté extérieur du boîtier (11) et/ou de la fenêtre de rayonnement (12),
**caractérisé en ce que**
le dispositif en forme de boudin est un tuyau d'évacuation d'air (15) qui évacue l'air depuis l'espace intérieur du véhicule automobile (100).

2. Arrangement selon la revendication 1, **caractérisé en ce que** la zone de sortie (14) du tuyau d'évacuation d'air (15) est disposée sur le côté du boîtier (11) à l'opposé de la fenêtre de rayonnement (12) .

3. Arrangement selon la revendication 2, **caractérisé en ce qu'**il existe au moins un élément de guidage d'air (20) qui guide l'air s'écoulant hors de la zone de sortie (14) sur le capteur radar (10) et/ou sur le pare-chocs (102).

4. Arrangement selon la revendication 3, **caractérisé en ce qu'**un espace intermédiaire (13) est formé entre la fenêtre de rayonnement (12) et le pare-chocs (102), et **en ce que** l'au moins un élément de guidage d'air (20) guide au moins une partie de l'air entre la fenêtre de rayonnement (12) et le pare-chocs (102) .

5. Arrangement selon la revendication 3 ou 4, **caractérisé en ce que** l'élément de guidage d'air (20) entoure le boîtier (11) du capteur radar (10) au niveau d'une surface périphérique (17) du boîtier (11) au moins sensiblement entièrement, en formant une fente (17) formée au moins dans certaines zones entre la surface périphérique (17) du boîtier (11) et l'élément de guidage d'air (20).

6. Arrangement selon l'une des revendications 2 à 5, **caractérisé en ce que** l'au moins un élément de guidage d'air (20) est fixé au pare-chocs (102).

7. Arrangement selon l'une des revendications 1 à 6, **caractérisé en ce que** le capteur radar (10) est disposé dans une zone de coin (101) du pare-chocs (102) .

8. Arrangement selon l'une des revendications 1 à 7, **caractérisé en ce qu'**en présence de plusieurs capteurs radars (10), le ou les capteur(s) radar(s) (10) qui est/sont muni(s) du tuyau d'évacuation d'air (15) est/sont celui/ceux qui présente(nt) une importance élevée en matière de sécurité et/ou qui a/ont tendance à geler/givrer en raison de la disposition spécifique par rapport aux autres capteurs radars (10) .

9. Procédé pour faire fonctionner un arrangement selon l'une des revendications 1 à 8, **caractérisé en ce que** l'acheminement de l'air est effectué en fonction de la température, notamment en fonction de la température extérieure.

10. Sous-ensemble, notamment pare-chocs (102), équipé d'un arrangement selon l'une des revendications 1 à 8.
